# EUROPÄISCHE PATENTSCHRIFT

(11) **EP 0 911 603 B1**
(45) Veröffentlichungstag und Bekanntmachung des Hinweises auf die Patenterteilung: **27.06.2001**
(21) Anmeldenummer: 97118334.8
(22) Anmeldetag: 22.10.1997
(51) Int. Cl.: G01B 11/00, G05B 19/401

(54) **Verfahren zur optischen Bestimmung der Lage eines räumlichen Körpers**
Method for the determination of the position of a three-dimensional body
Procédé pour la détermination de la position d'un object tridimensionel

(43) Veröffentlichungstag der Anmeldung: 28.04.1999
(73) Patentinhaber: ISRA Vision Systems AG, 64297 Darmstadt (DE)
(72) Erfinder: Ersü, Enis, 64297 Darmstadt (DE)
(74) Vertreter: KEIL & SCHAAFHAUSEN

(56) Entgegenhaltungen:
- US-A- 4 942 539
- US-A- 5 160 977
- PATENT ABSTRACTS OF JAPAN vol. 017, no. 445 (P-1593), 16. August 1993 & JP 05 099622 A (A T R SHICHIYOUKAKU KIKO KENKYUSHO:KK), 23. April 1993

## Beschreibung

Die Erfindung betrifft ein Verfahren zur optischen Bestimmung der Lage eines endlichen starren Körpers in einem räumlichen Koordinatensystem.

Bei der Serienherstellung mehrteiliger Körper ist es beim Einsatz von Robotern erforderlich, die einzelnen Bauteile in richtiger Lage und an der richtigen Stelle für den fertigzustellenden dreidimensionalen Körper bereit zu halten. Darüberhinaus ist es auch üblich, derartige Roboter für das Schweißen oder für das Einfügen von Bauteilen in das Gesamtgerät einzusetzen.

Hierbei ist es wichtig, die Lage des zu bestückenden Bauteils und die Lage des tätigwerdenden Roboters mit dem einzufügenden Bauteil zur Vermeidung von Ausschuß aufeinander abzustimmen.

Ein derartiges Aufeinanderabstimmen wird gemäß der europäischen Veröffentlichung 0489919 mittels Kalibriertafel mit Punkten erreicht. Ebenso wird in der US-Patentschrift 4639878 eine Abstimmung dergestalt erreicht, daß letztlich einzelne Punkte auf dem zu bearbeitenden Körper mit dem Roboter in Übereinstimmung gebracht werden. Gemäß US-Patentschrift 4 942 539, "Verfahren und Vorrichtung zur automatischen Bestimmung der Position und Orientierung eines Objektes im 3D-Raum" ist bekannt, daß anhand der perspektivischen Information in einem Bild die Lage eines Objektes in einem Raum unter Einbeziehung einer Kombination von Punkten und Linien bestimmt werden kann. Im Hinblick auf die Verwendung von Punkten, sei es an dem zu bearbeitenden Bauteil und/oder in Verbindung mit einer Kalibriertafel, welche ebenfalls über Punkte abgetastet wird, treten Schwierigkeiten deshalb auf, weil am zu bearbeitenden Bauteil angeordnete Punkte durch Verschmutzung oder Überdekkung durch andere Bauteile nicht immer sicher erkannt werden können, bzw. derartige Punkte gar nicht vorliegen.

Ausgehend hiervon liegt der vorliegenden Erfindung die Aufgabe zugrunde, ohne Kenntnis der gegenseitigen Lage von Werkzeug und Werkstück bei Verwendung eines Roboters ein zielsicheres Arbeiten am Werkstück zu ermöglichen. Diese Aufgabe wird durch ein Verfahren gemäß Anspruch 1 gelöst. Vorteilhafte Ausgestaltungen des Verfahrens sind Gegenstand der Ansprüche 2 und 3. Dabei wird auf eine Zuordnung ausgezeichneter Punkte völlig verzichtet, so daß die Beschränkung auf solche am Körper identifizierbaren Punkte völlig entfällt; es können darüberhinaus sogar gekrümmte Linien verwendet werden.

Durch diese Ausgestaltung wird trotz Minimierung im Aufwand eine eindeutige Zuordnung zwischen Werkstück und Werkzeuglage erreicht. Darüberhinaus wird der Einfluß vorhandener Ungenauigkeiten minimiert.

Eine Vorrichtung zur Durchführung des Verfahrens mit in einem Raum angeordneten Kameras und einem in diesem befindlichen Körper mit eigenem Koordinatensystem zeichnet sich dadurch aus, daß mindestens drei Kanten und/oder Linien auf dem Körper mit einer oder mehreren Kameras erkannt wird, daß jede Kamera auf eine andere Kante und/oder Linie ausgerichtet ist und daß die gegenseitige Lage der Kameras kalibriert wird. Hierdurch wird in einfacher und schneller Weise ohne vorheriges Aufnehmen von Punkten eine gegenseitige Lagebestimmung der zusammenzusetzenden Körper erreicht. Zufolge der kontrollierten Bewegbarkeit der im Raum befindlichen Kamera gemäß Anspruch 3, welche in bezug zum räumlichen Koordinatensystem steht, kann diese Kamera dazu herangezogen werden, die Lage eines größeren Bauteils im Raum zu bestimmen.

In der nachfolgenden Zeichnung wird die Erfindung an einem Ausführungsbeispiel näher erläutert. Es wird jedoch darauf hingewiesen, daß es sich nicht nur zum Deckel in konvexe Behälter, wie im Ausführungsbeispiel dargestellt handelt, sondern daß auch andere Bauteilzusammenfügungen unter den Schutzumfang der vorliegenden Erfindung fallen, beispielsweise das Einfügen von Bauteilen in ein Fahrzeug, wie Türen, Fenster, das Auftragen von Klebe- oder Dichtraupen oder das Zusammenfügen und Verschweißen räumlich gekrümmter Bauteile im Reaktorbau oder in der Feinwerktechnik das Zusammenfügen in no-man-Betrieben von optischen Bauteilen, ganz allgemein zur Lagebestimmung von Transportmitteln und deren Bauteilen beim Zusammenbau, beim Auseinandernehmen oder einer Reparatur.

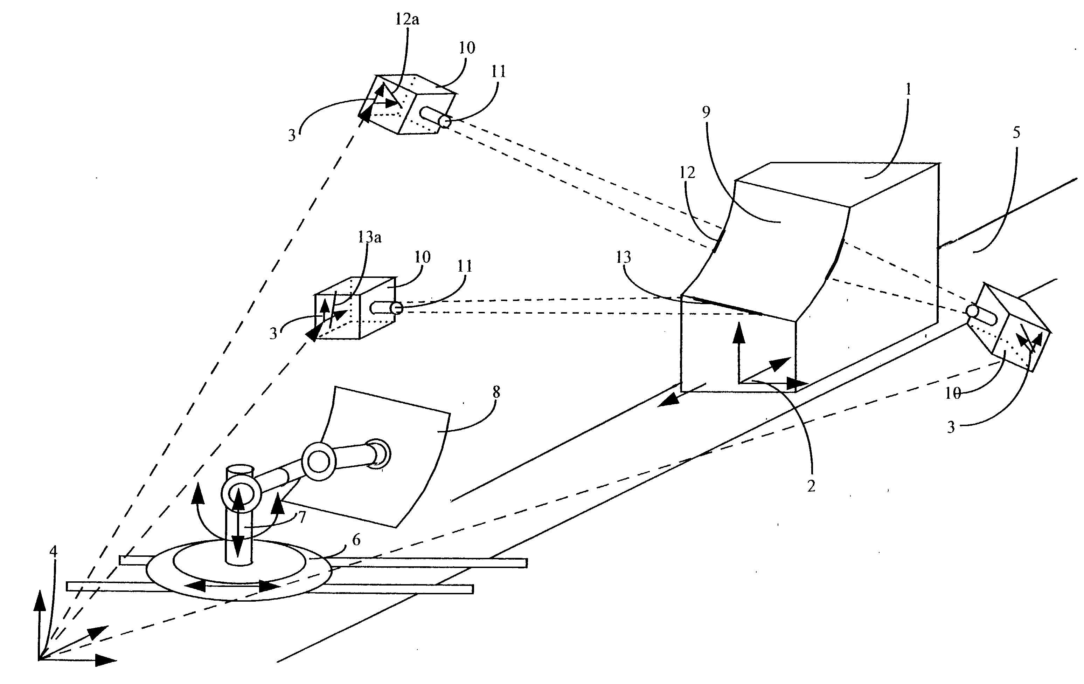

In einem Ausführungsbeispiel wird gemäß der Figur ein Transportmittel 1 dargestellt, welches über eine Fördersystem 5 einer Bearbeitungsstelle 6 zugeführt wird.

Unter Transportmittel sind Transportmittel aller Art zu verstehen, wie Flugzeug, Satelit, Schiff, Fahrzeug usw.; der Ausdruck Fördersystem steht stellvertretend für alle Arten derartiger Systeme wie Rollbahnen, Förderbänder, Schrägaufzüge, Senktrechtförderer usw.

Die Bearbeitungsstelle 6 besteht aus einem Roboter 7, welcher heb- und senkbar sowie drehbar und neigbar ist. Vom Roboter wird im Ausführungsbeispiel eine Deckel 8 für das Transportmittel 1 bereit gehalten. Dieser Deckel 8 soll in die hierzu vorbereitete Öffnung 9 des Transportmittel 1 an der Bearbeitungsstelle 6 eingefügt werden.

Um ein derartiges Einfügen auch bei nachfolgenden Transportmittel derselben Gattung fehlerfrei im Serienbetrieb durchzuführen, wird gemäß der Erfindung die Öffnung 9 des Transportmittel 1, welche über ein körpereigenes Koordinatensystem 2 beschreibbar ist, von drei Kameras 10, welche ein ebenes Koordinatensystem 3 besitzen und welche zu einem räumlichen Koordinatensystem 4 ausgerichtet sind, aufgenommen. Hierdurch ist sichergestellt, daß beim gleichen Transportmitteltyp das körpereigene Koordinatensystem 2 gleich bleibt und daß somit ein sicheres Einsetzen von Deckeln durchgeführt werden kann.

Auf den über Linsen 11 aufgenommenen Bildern auf den ebenen Koordinatensystemen 3 jeder Kamera 10 ist die Zuordnung der Bilder zu der jeweiligen Kante zwischen Öffnung und Deckel sichergestellt. So wird eine linke Kante 12 der Öffnung 9 zu einer Bildkante 12a. Eine obere Kante 13 zu einer Bildkante 13a, unabhängig davon, welcher Teil der Kanten über die jeweilige Kamera 10 aufgenommen wird. Dieser Wert ist dann eindeutig den entsprechenden Kanten des Deckels 8 zuzuordnen.

Der Verlauf aller abgebildeten Linien muß der bekannten Geometrie des Körpers entsprechen wenn die räumlichen Verläufe aller Linien entsprechend der Geometrie des starren Körpers, in diesem Falle des Deckels 8, welche eingefügt werden soll, der Abbildung der Kameras und der Kalibrierung der Kameras in bezug auf das räumliche Koordinatensystem 4 zur Bestimmung der Lage des Transportmittels 1 zur Übereinstimmung gebracht worden sind.

## Patentansprüche

1. Verfahren zur optischen Bestimmung der Lage eines endlichen starren Körpers in einem räumlichen Koordinatensystem (4) dadurch gekennzeichnet, daß aus einer Auswahl von mehreren, mindestens drei auf dem starren Körper vorhandenen Linien oder Kanten, deren Bezug zum körpereigenen Koordinatensystem (2) bekannt ist, jede der genannten mindestens drei Linien oder Kanten für sich in einem ihr zugeordneten ebenen Koordinatensystem (3) abgebildet wird und daß die Lage jedes ebenen Koordinatensystems (3) auf das räumliche Koordinatensystem(4) bezogen ist, wobei auf eine Zuordnung ausgezeichneter Punkte verzichtet wird.

2. Verfahren nach Anspruch 1 dadurch gekennzeichnet,daß diese optisch bestimmte Lage dieses Körpers mit einer entsprechenden Lage eines anderen Körpers verglichen wird.

3. Verfahren nach Anspruch 1 und/oder 2 dadurch gekennzeichnet, daß zur Abbildung der Linien oder Kanten eine räumlich kontrolliert bewegbare Kamera herangezogen wird.

## Claims

1. Method for the optical determination of the position of a finite rigid body in a spatial coordinate system (4), characterized in that from a selection of several, at least three lines or edges provided on the rigid body, the relation of which to the coordinate system (2) of the body being known, each of the said at least three lines or edges are depicted in a plane coordinate system (3) assigned to them and that the position of each plane coordinate system (3) refers to the spatial coordinate system (4), where no marked points have been assigned.

2. Method according to claim 1, characterized in that this optically determined position of this body is compared with a corresponding position of another body.

3. Method according to claim 1 and/or 2, characterized in that for the depiction of the lines or edges a spatially controlled movable camera is used.

## Revendications

1. Procédé de détermination optique de la position d'un corps rigide fini dans un système de coordonnées spatiales (4) caractérisé en ce que, à partir d'un choix de plusieurs lignes ou bords, au moins trois, présents sur le corps rigide et dont la relation avec le système de coordonnées propre du corps (2) est connue, chacun des au moins trois lignes ou bords est représenté dans un système de coordonnées plan (3) qui lui est attribué, et en ce que la position de chaque système de coordonnées plan (3) est rapportée au système de coordonnées spatiale (4) en renonçant à une attribution de points particuliers.

2. Procédé selon la revendication 1, caractérisé en ce que cette position déterminée optiquement de ce corps est comparée à une position correspondante d'un autre corps.

3. Procédé selon la revendication 1 et / ou 2, caractérisé en ce qu'une caméra mobile contrôlée dans l'espace est utilisée pour la représentation des lignes ou bords.
